# EUROPÄISCHE PATENTANMELDUNG

(11) **EP 3 429 072 A1**
(43) Veröffentlichungstag der Anmeldung: **16.01.2019**
(21) Anmeldenummer: 17181219.1
(22) Anmeldetag: 13.07.2017
(51) Int. Cl.: H02K 41/03, H02K 11/225, H02K 11/00

(54) **ENERGIEBEREITSTELLUNG AUF EINEM SEKUNDÄRTEIL IN EINEM LINEARMOTORBASIERTEN SYSTEM**

(71) Anmelder: Siemens Aktiengesellschaft, 80333 München (DE)
(72) Erfinder: Spindler, Carsten, 07368 Remptendorf (DE); Wedel, Bernd, 91096 Möhrendorf (DE)

(57) **Zusammenfassung**

Die Erfindung betrifft ein Verfahren zur Energiebereitstellung auf einem Sekundärteil in einem linearmotorbasierten System,
- wobei im linearmotorbasierten System mindestens ein Primärteil mit Primärteilspulen vorgesehen ist,
- wobei mindestens ein Sekundärteil auf dem mindestens einen Primärteil vorgesehen ist, dessen Bewegung separat gesteuert wird,
- wobei das mindestens eine Sekundärteil ein jeweiliges magnetisches Aktivteil zur Ausbildung eines jeweiligen Sekundärteilmagnetfeldes aufweist und die Primärteilspulen derart mit einem Antriebsstrom ansteuerbar sind, dass sich ein Primärteilmagnetfeld ausbildet, so dass eine auf das mindestens eine Sekundärteil wirkende Vorschubkraft und eine Bewegung des mindestens einen Sekundärteils entlang des mindestens einen Primärteils erreichbar ist,
- wobei an dem mindestens einen Sekundärteil mindestens eine jeweilige Sekundärteilwicklung vorgesehen ist,
- wobei ausgewählte Primärteilspulen mit einem Primärstrom bestromt werden, der zu einem Wechselmagnetfeld führt und wobei durch das Wechselmagnetfeld eine Spannung in einer zu den ausgewählten Primärteilspulen in räumlicher Nähe befindlichen Sekundärteilwicklung induziert wird und die Spannung genutzt wird zur Energiebereitstellung an einen oder mehrere an das mindestens eine Sekundärteil der in räumlicher Nähe befindlichen Sekundärteilwicklung angeschlossene Verbraucher oder Energiespeicher.

## Beschreibung

Die Erfindung betrifft ein Verfahren zur Energiebereitstellung auf einem Sekundärteil in einem linearmotorbasierten System sowie ein dazugehöriges linearmotorbasiertes System.

Linearmotorbasierte Systeme werden im industriellen Umfeld eingesetzt, um beispielsweise Sekundärteile, welche auf einem Transportsystem beweglich angebracht sind, mit Hilfe von Linearmotortechnik gesteuert oder geregelt zu verfahren. Die Sekundärteile, manchmal auch Läufer genannt, können beispielsweise Komponenten oder Stückgut befördern, beispielsweise zwischen Verarbeitungsstationen in einer Fertigungsanlage oder innerhalb einer Verarbeitungsstation. Auch Werkzeugmaschinen oder sonstige Maschinen können als Antrieb Linearmotoren verwenden und dafür Sekundärteile aufweisen. Sekundärteile können ferner als Werkstückträger verwendet werden oder mit Werkstückträgern koppelbar sein, die Werkstücke in einer Anlage transportieren. Dabei werden die Sekundärteile beispielsweise als sog. Carrier entlang eines Primärteils mit Hilfe von im Primärteil vorgesehenen Primärteilspulen hochpräzise bewegt. Es sind aus dem Stand der Technik sog. Multi-Carrier-Systeme, kurz MCS, bekannt, bei welchen mehrere Sekundärteile oder Carrier auf einem Langstator vorgesehen sind und unabhängig voneinander über eine entsprechende Ansteuerung der Primärteilspulen verfahren werden können.

Auf linearmotorbasierten Systemen, wie beispielsweise Multi-Carrier-Systemen, ist es derzeit kaum möglich, Energie mit vertretbarem technischem Aufwand zu übertragen. Eine Energieübertragung ist beispielsweise wünschenswert, wenn auf einzelnen Sekundärteilen in einem System Verbraucher mit Energie versorgt werden sollen. Eine Lösung, in welcher eine kabelbasierte Energieversorgung verwendet wird, ist aufgrund der geforderten freien Bewegbarkeit der Sekundärteile in einer Anlage meist nicht realisierbar.

Es sind aus dem Stand der Technik Lösungen bekannt, bei welchem über Schleifkontakte eine Spannung auf einen Sekundärteil übertragen wird. Dies geht mit Verschleiß, Wartungsaufwand, Verschmutzung und unkalkulierbarer Zuverlässigkeit einher.

Vor diesem Hintergrund ist es eine Aufgabe der vorliegenden Erfindung, ein Verfahren für ein linearmotorbasiertes System sowie ein linearmotorbasiertes System bereitzustellen, bei welchem eine Energieübertragung auf Sekundärteile des Systems verbessert erfolgen kann.

Die Erfindung betrifft ein Verfahren zur Energiebereitstellung auf einem Sekundärteil in einem linearmotorbasierten System,
- wobei im linearmotorbasierten System mindestens ein Primärteile mit Primärteilspulen vorgesehen ist,
- wobei mindestens ein Sekundärteil auf dem mindestens einen Primärteil vorgesehen ist, dessen Bewegung separat gesteuert wird,
- wobei das mindestens eine Sekundärteil ein jeweiliges magnetisches Aktivteil zur Ausbildung eines jeweiligen Sekundärteilmagnetfeldes aufweist und die Primärteilspulen derart mit einem Antriebsstrom ansteuerbar sind, dass sich ein Primärteilmagnetfeld ausbildet, so dass eine auf das mindestens eine Sekundärteil wirkende Vorschubkraft und eine Bewegung des mindestens einen Sekundärteils entlang des mindestens einen Primärteils erreichbar ist,
- wobei an dem mindestens einen Sekundärteil mindestens eine jeweilige Sekundärteilwicklung vorgesehen ist,
- wobei ausgewählte Primärteilspulen mit einem Primärstrom bestromt werden, der zu einem Wechselmagnetfeld führt,
- wobei durch das Wechselmagnetfeld eine Spannung in einer zu den ausgewählten Primärteilspulen in räumlicher Nähe befindlichen Sekundärteilwicklung induziert wird und die Spannung genutzt wird zur Energiebereitstellung an einen oder mehrere an das mindestens eine Sekundärteil der in räumlicher Nähe befindlichen Sekundärteilwicklung angeschlossene Verbraucher oder Energiespeicher.

Unter einem Primärteil werden in der vorliegenden Erfindung ein Aktivteil bzw. mehrere Aktivteile eines Linearmotors verstanden. Es kann sich um einen Langstator handeln, entlang dessen Sekundärteile bewegt werden und der selbst fest stehend verbaut ist. Durch ein individuelles Bestromen der Spulen wird entlang des Primärteils ein magnetisches Wanderfeld erzeugt, das Primärteilmagnetfeld, welches eine Bewegung des Sekundärteils entlang des Primärteils bewirkt. Das Sekundärteil weist ein magnetisches Aktivteil, beispielsweise einen oder mehrere Permanentmagneten, auf, welcher durch das magnetische Wanderfeld des Primärteils eine Vorschubkraft erfährt. Das durch das magnetische Aktivteil gebildete Sekundärteilmagnetfeld wechselwirkt dabei mit dem Primärteilmagnetfeld, sodass eine Vorschubkraft entsteht, welche den Vorschub des Sekundärteils bewirkt, beispielsweise in horizontaler Richtung entlang eines horizontal befestigten Langstators.

Unter einem Linearantrieb wird in der vorliegenden Anmeldung ein Antriebssystem verstanden, bei welchem Linearmotoren zum Antrieb genutzt werden. Unter dem Antriebsstrom wird derjenige Strom verstanden, mit dem die Primärteilspulen zur Erzeugung des Wandermagnetfeldes bestromt werden und der beispielsweise für die Bewegung der Carrier entlang des Stators verantwortlich ist. Es kann sich um einen Linearantrieb mit Einzelspultechnik mit entsprechendem Primärteil handeln oder um ein Dreiphasenstrom-basierten Antrieb mit aneinandergereihten Segmenten.

Bei einem sog. Multi-Carrier-System werden die Primärteilspulen eines Langstators mit Antriebsströmen derart belegt, dass mehrere Carrier unabhängig voneinander entlang des Stators bewegt werden können.

Ein Primärteil umfasst beispielsweise eine Vielzahl von Spulen, insbesondere bei einer dreiphasigen Bestromung ganzzahlige Vielfache von drei.

An einem Sekundärteil oder an mindestens einem Sekundärteil im Falle mehrerer Sekundärteile ist jeweils mindestens eine Sekundärteilwicklung vorgesehen. Sekundärteilwicklung bedeutet im Zusammenhang der vorliegenden Anmeldung, dass die Wicklung räumlich im oder am Sekundärteil vorgesehen ist. Die mindestens eine an einem Sekundärteil angebrachte Sekundärteilwicklung kann als Energieübertragungswicklung angesehen werden. Sie wird derart vorgesehen, dass in ihr ein Sekundärstrom aufgrund eines angelegten Primärstromes induziert wird. Eine durch den Sekundärstrom abgreifbare Spannung wird zur Energieversorgung von an das Sekundärteil angeschlossenen Verbrauchern oder Energiespeichern genutzt. Das Induzieren des Sekundärstromes ist gerade dann möglich, wenn sich ein Sekundärteil über ausgewählten, mit einem Primärstrom bestromten Primärteilspulen befindet. Ausgewählt können insbesondere alle Primärteilspulen eines Primärteils sein oder alle Primärteilspulen in einer Segmentanordnung oder ausgewählte Spulen in einem linearmotorbasierten System mit Einzelspultechnik.

Die Primärteilspulen sind derart mit dem Primärstrom zu bestromen, dass ein Wechselmagnetfeld in Richtung der Sekundärteilwicklung erzeugt wird. Dadurch wird in der Sekundärteilwicklung ein Sekundärstrom induziert.

Vorteilhafter Weise sind mehrere Sekundärteilwicklungen je Sekundärteil vorgesehen, auf die jeweils ein Sekundärstrom induziert werden kann und die jeweils eine Spannung bereitstellen können. In einer vorteilhaften Variante ist eine um mehrere Pole des Permanentmagneten mäanderförmig gewickelte sogenannte Wellenwicklung vorgesehen. Die Wicklung ist in eine Schaltung mit Verbraucher oder Energiespeicher eingebaut. Als Energiespeicher können Kondensatoren oder Batterien oder Akkumulatoren vorgesehen sein.

Der Antrieb der Sekundärteile kann möglichst ungehindert stattfinden und es ist, sofern gewollt, eine Energieübertragung gleichzeitig oder zeitgleich mit einer Bewegung des Sekundärteiles entlang des Primärteils, z.B. einer Vor-oder Rückwärtsbewegung, und mit einer entsprechenden Ansteuerung durch die Umrichter möglich. Vorteilhafterweise ist auch im Stillstand die Energieübertragung möglich, d.h. es wird keine Bewegung durch eine Antriebsbestromung benötigt, um die Energieübertragung zu realisieren.

Gemäß einer Ausgestaltung ist eine Wicklungsachse der Sekundärteilwicklung zumindest anteilig, insbesondere vollständig, in einer durch das magnetische Aktivteil vorgegebenen d-Achse vorgesehen. In einer besonders vorteilhaften Ausgestaltung ist die Sekundärteilwicklung vollständig in Richtung der d-Achse oder Hauptflussrichtung des Sekundärteilmagnetfeldes vorgesehen. Die Sekundärteilwicklung ist dann insbesondere derart angeordnet, dass die Wicklung am durch die Permanentmagnete des Sekundärteils erzeugten Fluss teilnimmt. Die Permanentmagnete eines Sekundärteils bilden eine Hauptflussrichtung oder d-Richtung oder d-Achse aus, die durch die räumliche Anordnung des magnetischen Aktivteils im Sekundärteil vorgegeben ist. Die Se-kundärteilwicklung ist derart angebracht, dass sie die Hauptflussrichtung feldverstärkend oder feldschwächend eingesetzt werden kann. Im besonders vorteilhaften Fall wird die Sekundärteilwicklung vollständig in d-Richtung angebracht und die Energieübertragungsbestromung erfolgt ebenfalls neben der Antriebsbestromung in q-Richtung in die vorgegebene d-Richtung, so dass eine Störung der Vorschubkraft minimiert wird. Ein Wechselmagnetfeld mit Anteilen in der durch die Permanentmagnete vorgegebenen d-Richtung beeinflusst die Vorschubbewegung aufgrund der Antriebsströme und der für die vorschiebende Kraft benötigten Magnetfelder möglichst wenig.

Gemäß einer Ausgestaltung werden die ausgewählten Primärteilspulen mit einem Primärstrom bestromt, der zu einem Wechselmagnetfeld zumindest anteilig, insbesondere vollständig, in Richtung einer Wicklungsachse der Sekundärteilwicklung führt. Zumindest zu einem gewissen Anteil sollte das Bestromen zu einem Wechselmagnetfeld in Richtung der Wicklungsachse der Sekundärteilwicklung führen. Je besser die Richtung des Wechselmagnetfeldes und die der Sekundärteilwicklung übereinstimmen, desto höher ist der induzierte Strom. Ist die Sekundärteilwicklung vollständig in Richtung der Hauptflussrichtung des Sekundärteilmagnetfeldes ausgerichtet und erzeugt der Primärstrom ein Wechselmagnetfeld vollständig in der Hauptflussrichtung des Sekundärteilmagnetfeldes, so kann eine maximale Spannung in der Sekundärteilwicklung induziert werden. Gibt beispielsweise ein Geber die Position des Sekundärteils an, so kann daraus abgeleitet werden, wo dessen d-Achse ist und wo die Spannung zu induzieren ist. Die Möglichkeit der Energieübertragung ist dann maximiert und der Einfluss auf die Bewegung aufgrund des Antriebsstroms des Sekundärteiles auf dem Primärteil zugleich vorteilhaft minimiert. Damit beeinflusst das sich durch den Primärstrom aufbauende Wechselmagnetfeld die Bewegung des Sekundärteiles entlang des Langstators möglichst wenig.

Der meist ungenutzte Anteil in d-Richtung oder Hauptflussrichtung oder entlang der d-Achse des Sekundärteiles wird bei der Bestromung der Primärteilspulen aktiv genutzt zur Energieübertragung. Die separat zu realisierende Ansteuerung der Primärteilspulen in der d-Richtung, in der die Sekundärteilwicklung gewählt und ausgerichtet wurde, erzeugt annähernd keine Kräfte, die den Vorschubkräften entgegenwirken oder mit diesen gleichwirken und die Vorwärtsbewegung beeinflussen oder stören könnten.

Die Frequenz des Primärstromes kann geschickter Weise so gewählt werden, dass sie hoch genug ist, um Verluste der Energieübertragungsfunktion gering zu halten, so dass der Luftspalt zwischen der Sender- und Empfängerwicklung, also der Primärwicklung und der Sekundärwicklung, groß sein kann. Für den Umrichter gilt, dass die verbleibenden Spannungsreserven niedriger sind, je höher die Frquenz für den Primärstrom gewählt wird. Um die Verlustleistung des Motors zu minimieren, sollte die Frequenz wiederum nicht zu hoch gewählt werden, um z.B. Wirbelstromverluste oder Ummagnetisierungsverluste gering zu halten.

Gemäß einer Ausgestaltung werden der oder die Verbraucher durch eine oder mehrere Heizungen, Kühlungen, Klemmungen, Ventile, Pumpen, Vakuumpumpen, Elektromotoren oder Kombinationen daraus gebildet. Somit kann eine integrierte Energieversorgung im Anwendungsfeld von Multi-Carrier-Systemen oder linearmotorbasierten Transportsystemen vorteilhaft gewährleistet werden. Eine aufwendige Verkabelung einzelner Sekundärteile oder Carrier entfällt auf vorteilhafte Weise und die Anwendungen von Multi-Carrier-Systemen oder linearmotorbasierten Transportsystemen werden durch die Möglichkeit der einfachen Energieversorgung von Verbrauchern auf einzelnen Sekundärteilen oder allen vorhandenen Sekundärteilen erweitert.

Gemäß einer Ausgestaltung werden die Primärteilspulen mit einem Primärstrom bestromt, wenn durch eine Positionserfassung eine Nähe eines Sekundärteiles mit Sekundärteilwicklung zu den Primärteilspulen erkannt wird. Dadurch wird auf vorteilhafte Weise ein Einfluss auf die mittels der Antriebsströme gesteuerte Bewegung minimiert. Nur wenn ein Sekundärteil in der Nähe der Primärteilspulen erkannt wird und eine Energieübertragung potentiell möglich ist, erfolgt das Bestromen mit dem Primärstrom, welches die Energieübertragung ermöglicht.

Gemäß einer Ausgestaltung werden durch die Bestromung mit dem Primärstrom veränderte Istwerte der Antriebsbestromung kompensiert. Bei bekannten, definierten, statischen oder unveränderlichen Lasten auf Sekundärseite kann so eine einfache Kompensation realisiert werden, so dass keine Auswirkung der Energieübertragungsfunktion auf den eigentlichen Iq/Id Stromregler folgt.

Gemäß einer Ausgestaltung werden durch die Bestromung mit dem Primärstrom veränderte Istwerte nachgeregelt. Bei veränderlichen Lasten oder Verbrauchern, d.h. sich ändernden Energiebedarf wird eine Rückwirkung der Last so ausgeregelt, dass keine Auswirkung der Energieübertragungsfunktion auf den eigentlichen Iq/Id Stromregler folgt.

Gemäß einer Ausgestaltung werden ausgewählte Primärteilspulen mit einem Primärstrom in einer Ortungsfrequenz bestromt zum Induzieren eines Ortungssekundärstromes, und das Induzieren des Ortungssekundärstromes in der Sekundärteilwicklung bewirkt eine Induktivitätsänderung einer in räumlicher Nähe zum Sekundärteil befindlichen Primärteilspule und es werden jeweilige Stromantworten der Primärteilspulen gemessen, wobei gemessene Stromänderungen der Stromantworten die Induktivitätsänderung der jeweiligen Primärteilspule anzeigen sowie eine relative Position eines Sekundärteils zu der jeweiligen Primärteilspule. Zusätzlich zu der Energieübertragung mittels einer Bestromung mit einer Energieübertragungsfrequenz erfolgt somit gleichzeitig oder im Wechsel eine Bestromung mit einer Ortungsfrequenz. Die Ortungsfrequenz hat beispielsweise im Vergleich zur Energieübertragungsfrequenz eine relativ hohe Frequenz und ist beispielsweise auf eine Resonanzfrequenz eines Schwingkreises, in welchen die Sekundärteilwicklung integriert ist, abgestimmt.

Die Sekundärteilwicklung hat dann neben der Funktion als Energieübertragungswicklung zusätzlich die Funktion als Ortungswicklung. Die beiden Funktionen werden über unterschiedliche Frequenzen angesteuert, um disjunkt zu sein. Vorteilhafterweise kann eine Realisierung über einen Verbraucher mit kapazitivem Anteil erfolgen. Eine Schaltung, in der die Sekundärteilwicklung eingebaut ist, ist dann entsprechend für beide Funktionen ausgelegt.

Die Erfindung betrifft ferner ein linearmotorbasiertes System, aufweisend
- mindestens ein Primärteil mit Primärteilspulen,
- mindestens ein Sekundärteil, ein jeweiliges Sekundärteil aufweisend ein jeweiliges magnetisches Aktivteil zur Ausbildung eines jeweiligen Sekundärteilmagnetfeldes, wobei die Primärteilspulen derart mit einem Antriebsstrom ansteuerbar sind, dass sich ein Primärteilmagnetfeld ausbildet, so dass eine Bewegung des mindestens einen Sekundärteils entlang des mindestens einen Primärteils erreichbar ist, sowie aufweisend eine jeweilige Sekundärteilwicklung,
- eine Steuereinheit zum Bestromen der Primärteilspulen mit einem Primärstrom, der zu einem Wechselmagnetfeld führt,
- mindestens einen Verbraucher oder Energiespeicher angeschlossen an das mindestens eine Sekundärteil, wobei der Verbraucher oder Energiespeicher eine durch das Wechselmagnetfeld in einer zu den Primärteilspulen in räumlicher Nähe befindlichen Sekundärteilwicklung induzierte Spannung als Energiequelle nutzt.

Gemäß einer Ausgestaltung ist die Sekundärteilwicklung zumindest anteilig, insbesondere vollständig, in einer durch das magnetische Aktivteil vorgegebenen d-Achse angeordnet.

Gemäß einer Ausgestaltung wird das mindestens eine Primärteil mit einem Primärstrom bestromt, der zu einem Wechsel-Magnetfeld mit Anteilen, insbesondere vollständig, in Richtung einer Wicklungsachse der Sekundärteilwicklung führt.

Gemäß einer Ausgestaltung ist eine einphasige Energieübertragungswicklung vorgesehen zur Energieversorgung einphasiger Lasten. Beispielsweise können so Heizungen oder Klemmungen oder Ventile oder einphasige Motoren mit Energie versorgt werden.

Insbesondere sind Verbraucher an einen Energiespeicher oder eine Batterie angeschlossen, welche durch die induzierte Spannung geladen werden kann.

Gemäß einer Ausgestaltung ist eine dreiphasige Energieübertragungswicklung vorgesehen zur Energieversorgung dreiphasiger Lasten. Dies erweitert den Anwendungsfall der Erfindung nochmals, in dem beispielsweise auch elektrische Antriebe, wie permanent erregte Synchronmotoren (PSM), mit Energie versorgbar sind. Zahlreiche vorteilhafte Implementierungen, welche den Einsatz eines Motors auf einem Sekundärteil beinhalten, werden somit ermöglicht.

Gemäß einer Ausgestaltung ist die jeweilige Sekundärteilwicklung innerhalb des jeweiligen magnetischen Aktivteils eingebettet. Beispielsweise ist die Wicklung um den Permanentmagnet des Sekundärteiles herum ausgebildet.

Gemäß einer Ausgestaltung ist die jeweilige Sekundärteilwicklung seitlich, insbesondere räumlich, versetzt zum jeweiligen magnetischen Aktivteil vorgesehen. Je nach Anwendungsfall ist so entweder eine besonders kompakte Implementierung möglich oder ein Aufbau, bei welchem möglichst wenig mechanische Abhängigkeiten zwischen dem Permanentmagneten und der Energieübertragungswicklung im Sekundärteil bestehen. Räumlich Versetzung ist in allen 3 räumlichen Dimensionen möglich, d.h. davor oder dahinter oder daneben oder oberhalb oder unterhalb der Permanentmagnete.

Die Erfindung wird nachfolgend anhand eines Ausführungsbeispiels mit Hilfe der Figur näher erläutert.

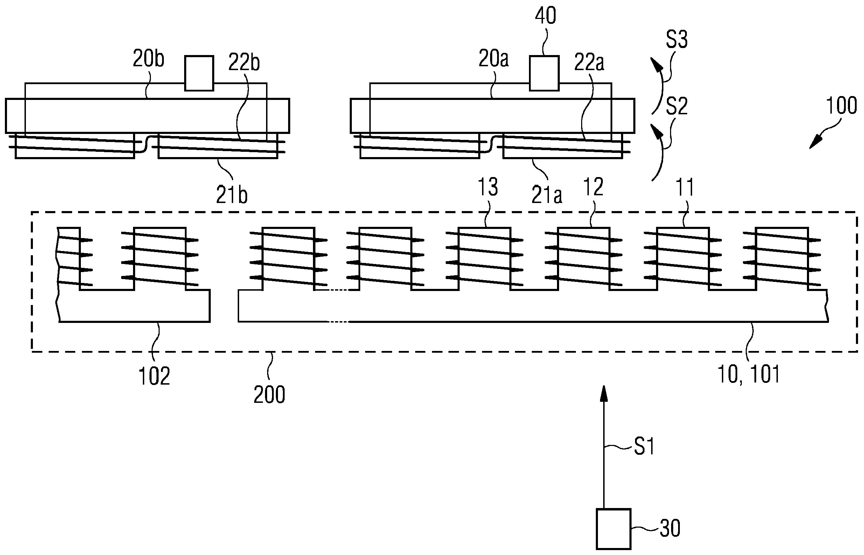

Figur 1 zeigt schematisch einen Ausschnitt aus einem linearmotorbasierten System 100, bei welchem ein Langstator 200 als Primärteil 10 eingesetzt wird sowie eine Vielzahl von Sekundärteilen oder Carriern 20a, 20b,.... Der Langstator 200 weist mehrere Abschnitte 101, 102 oder Segmente auf, innerhalb derer und über welche hinweg die Sekundärteile 20a, 20b... bewegt werden. Die Bewegungssteuerung erfolgt durch Ansteuerung der Primärteilspulen 11, 12, 13... welche derart bestromt werden, dass sich die magnetischen Aktivteilen 21a, 21b, ... der Sekundärteile 20a, 20b entsprechend auszurichten versuchen und dadurch eine Bewegungskraft in Richtung des Langstators 200 erreicht wird.

Das System 100 ist beispielsweise in einer werkstückverarbeitenden Automatisierungsanlage vorgesehen, in welcher die Carrier 20a, 20b,... als Werkstückträger fungieren oder mit Werkstückträgern versehen werden können, welche wiederum ein zu verarbeitendes Werkstück aufnehmen können. Beispielsweise soll das Werkstück zwischen zwei Bearbeitungsstationen befördert werden und dabei flexibel gruppiert werden. Zwischen den Bearbeitungsstationen soll das Werkstück auf einer konstanten, beispielsweise hohen Temperatur gehalten werden, damit Umformprozesse auf möglichst optimierte Weise durchgeführt werden können. Dafür ist auf dem Sekundärteil eine Heizvorrichtung vorgesehen, welche das Werkstück auf einer festlegbaren Temperatur hält. Auf beispielsweise jedem der Sekundärteile 20a, 20b... in dem System ist eine Sekundärteilwicklung 22a, 22b, ... um die Permanentmagneten 21a, 21b, ... herum vorgesehen. Beispielsweise erfolgt eine Bestromung von Primärteilspulen 11,12,13..., über welchen gerade ein Carrier verfahren wird, mit einem Primärstrom in einer bestimmten Frequenz. Das Umrichtersystem, welches für die Bestromung der Primärteilspulen, sowohl für den Antrieb, als auch für die Energieversorgung, zuständig ist, wird von einer Steuereinheit 30 so angesteuert, dass in der d-Achse des Linearmotors eine Spannung einstellbarer Frequenz und Amplitude ausgegeben wird S1. Die d-Achse des Linearmotors entspricht dabei der Hauptflussrichtung des jeweiligen Sekundärteilmagnetfeldes. Auch die jeweilige Sekundärteilwicklung 22a ist in dieser Richtung angeordnet, sodass ein Induzieren des Stromes in der jeweiligen Sekundärteilwicklung und ein dadurch bedingter Spannungsaufbau derart erfolgt S2, dass ein Einfluss durch das Primärteilmagnetfeld und auf das Primärteilmagnetfeld möglichst gering ist. Die Spannung kann abgegriffen werden und zur Energieversorung der Heizung genutzt werden S3. Es werden in Realisierungen Gleichrichter und ein DC/DC-Wandler vorgesehen, um die an der Heizung benötigte Spannung bereitzustellen. Der Antrieb der Sekundärteile kann ungehindert stattfinden und es ist, sofern gewollt, eine Energieübertragung gleichzeitig oder zeitgleich mit einer Bewegung des Sekundärteiles entlang des Primärteils, z.B. einer Vor-oder Rückwärtsbewegung, oder bei Stillstand des Sekundärteils und mit einer entsprechenden Ansteuerung durch die Umrichter möglich.

Ein einziges Umrichtersystem reicht vorteilhafterweise aus, um sowohl die Bestromung für den Antrieb als auch für die Energieübertragung zu ermöglichen. Insbesondere erfolgen zeitgleich eine Antriebsbestromung und eine Energieübertragungsbestromung. Je nach am vorgesehenen Verbraucher erforderlicher Spannung kann die auf mehreren Sekundärteilwicklungen eines Sekundärteiles induzierte Spannung gemeinsam, beispielsweise über Parallel- oder Reihenschaltungen, genutzt werden. Die erforderliche Energie auf dem Sekundärteil kann auch durch Einstellen der Frequenz und Amplitude der Spannung des Primärstroms berücksichtigt werden.

Mit der vorliegenden Erfindung ist es möglich, mit nur geringem Mehraufwand elektrische Energie auf ein Sekundärteil zu übertragen. Mehraufwand besteht lediglich in einer zusätzlichen Wicklung im Carrier. Diese Wicklung lässt sich beispielsweise in vorhandene Pollücken integrieren.

Auf vorteilhafte Weise werden Bearbeitungs- und Handlings-Prozesse in Systemen vereinfacht dadurch, dass Geräte zum Bearbeiten oder Halten, beispielsweise zum Bearbeiten oder Halten von Werkstücken, mit Hilfe der vorgeschlagenen Erfindung teilweise auf den Sekundärteilen selbst installiert und automatisiert werden können.

## Patentansprüche

1. Verfahren zur Energiebereitstellung auf einem Sekundärteil in einem linearmotorbasierten System,
- wobei im linearmotorbasierten System mindestens ein Primärteil mit Primärteilspulen vorgesehen ist,
- wobei mindestens ein Sekundärteil auf dem mindestens einen Primärteil vorgesehen ist, dessen Bewegung separat gesteuert wird,
- wobei das mindestens eine Sekundärteil ein jeweiliges magnetisches Aktivteil zur Ausbildung eines jeweiligen Sekundärteilmagnetfeldes aufweist und die Primärteilspulen derart mit einem Antriebsstrom ansteuerbar sind, dass sich ein Primärteilmagnetfeld ausbildet, so dass eine auf das mindestens eine Sekundärteil wirkende Vorschubkraft und eine Bewegung des mindestens einen Sekundärteils entlang des mindestens einen Primärteils erreichbar ist,
- wobei an dem mindestens einen Sekundärteil mindestens eine jeweilige Sekundärteilwicklung vorgesehen ist,
- wobei ausgewählte Primärteilspulen mit einem Primärstrom bestromt werden (S1), der zu einem Wechselmagnetfeld führt und wobei durch das Wechselmagnetfeld eine Spannung in einer zu den ausgewählten Primärteilspulen in räumlicher Nähe befindlichen Sekundärteilwicklung induziert wird (S2) und die Spannung genutzt wird (S3) zur Energiebereitstellung an einen oder mehrere an das mindestens eine Sekundärteil der in räumlicher Nähe befindlichen Sekundärteilwicklung angeschlossene Verbraucher oder Energiespeicher.

2. Verfahren nach Anspruch 1, wobei eine Wicklungsachse der Sekundärteilwicklung zumindest anteilig, insbesondere vollständig, in einer durch das magnetische Aktivteil vorgegebenen d-Achse vorgesehen ist.

3. Verfahren nach Anspruch 1 oder 2, wobei die ausgewählten Primärteilspulen mit einem Primärstrom bestromt werden, der zu einem Wechselmagnetfeld zumindest anteilig, insbesondere vollständig, in Richtung einer Wicklungsachse der Sekundärteilwicklung führt.

4. Verfahren nach einem der vorstehenden Ansprüche, wobei der oder die Verbraucher durch eine oder mehrere Heizungen, Kühlungen, Klemmungen, Ventile, Pumpen, Vakuumpumpen, Elektromotoren oder Kombinationen daraus gebildet werden.

5. Verfahren nach einem der vorstehenden Ansprüche, wobei Primärteilspulen mit dem Primärstrom bestromt werden, wenn durch eine Positionserfassung eine Nähe eines Sekundärteils mit Sekundärteilwicklung zu den Primärteilspulen erkannt wird.

6. Verfahren nach einem der vorstehenden Ansprüche, wobei durch die Bestromung mit dem Primärstrom veränderte Istwerte der Antriebsbestromung kompensiert werden.

7. Verfahren nach einem der vorstehenden Ansprüche, wobei durch die Bestromung mit dem Primärstrom veränderte Istwerte nachgeregelt werden.

8. Verfahren nach einem der vorstehenden Ansprüche, wobei ausgewählte Primärteilspulen mit einem Primärstrom in einer Ortungsfrequenz bestromt werden zum Induzieren eines Ortungssekundärstromes, und das Induzieren des Ortungssekundärstromes in der Sekundärteilwicklung eine Induktivitätsänderung einer in räumlicher Nähe zum Sekundärteil befindlichen Primärteilspule bewirkt und jeweilige Stromantworten der Primärteilspulen gemessen werden, wobei gemessene Stromänderungen der Stromantworten die Induktivitätsänderung der jeweiligen Primärteilspule anzeigen sowie eine relative Position eines Sekundärteils zu der jeweiligen Primärteilspule.

9. Linearmotorbasiertes System (100), aufweisend
- mindestens ein Primärteil (10) mit Primärteilspulen (11, 12,...),
- mindestens ein Sekundärteil (20a, 20b,...), ein jeweiliges Sekundärteil (20a, 20b,...) aufweisend ein jeweiliges magnetisches Aktivteil (21a, 21b,...) zur Ausbildung eines jeweiligen Sekundärteilmagnetfeldes, wobei die Primärteilspulen (11, 12,...) derart mit einem Antriebsstrom ansteuerbar sind, dass sich ein Primärteilmagnetfeld ausbildet, so dass eine Bewegung des mindestens einen Sekundärteils (20a, 20b,...) entlang des mindestens einen Primärteils (10) erreichbar ist, sowie aufweisend eine jeweilige Sekundärteilwicklung (22a, 22b,...),
- eine Steuereinheit (30) zum Bestromen der Primärteilspulen (11, 12,...) mit einem Primärstrom, der zu einem Wechselmagnetfeld führt,
- mindestens einen Verbraucher oder Energiespeicher (40) angeschlossen an das mindestens eine Sekundärteil (20a, 20b,...), wobei der Verbraucher oder Energiespeicher (40) eine durch das Wechselmagnetfeld in einer zu den Primärteilspulen (11, 12,...) in räumlicher Nähe befindlichen Sekundärteilwicklung (22a) induzierte Spannung als Energiequelle nutzt.

10. Linearmotorbasiertes System (100) nach Anspruch 9, wobei die Sekundärteilwicklung (22) zumindest anteilig, insbesondere vollständig, in einer durch das magnetische Aktivteil vorgegebenen d-Achse angeordnet ist.

11. Linearmotorbasiertes System (100) nach Anspruch 9 oder 10, wobei das mindestens eine Primärteil mit einem Primärstrom bestromt wird, der zu einem Wechsel-Magnetfeld mit Anteilen, insbesondere vollständig, in Richtung einer Wicklungsachse der Sekundärteilwicklung führt.

12. Linearmotorbasiertes System (100) nach einem der Ansprüche 9 bis 11, wobei eine einphasige Sekundärteilwicklung vorgesehen ist zur Energieversorgung einphasiger Lasten.

13. Linearmotorbasiertes System (100) nach einem der Ansprüche 9 bis 12, wobei eine dreiphasige Sekundärteilwicklung vorgesehen ist zur Energieversorgung dreiphasiger Lasten.

14. Linearmotorbasiertes System (100) nach einem der Ansprüche 9 bis 13, wobei die jeweilige Sekundärteilwicklung (221, 22b,...) innerhalb des jeweiligen magnetischen Aktivteils (21a, 21b,...) eingebettet ist.

15. Linearmotorbasiertes System (100) nach einem der Ansprüche 9 bis 13, wobei die jeweilige Sekundärteilwicklung (221, 22b,...) räumlich, insbesondere seitlich, versetzt zum jeweiligen magnetischen Aktivteil (21a, 21b,...) vorgesehen ist.
